# EUROPEAN PATENT SPECIFICATION

(11) **EP 4 545 916 B1**
(45) Date of publication and mention of the grant of the patent: **01.04.2026**
(21) Application number: 23205331.4
(22) Date of filing: 23.10.2023
(51) Int. Cl.: G01F 23/284, G01F 25/20, G01N 27/22, G01S 13/88, G01F 23/80, G01S 7/40, G01S 13/10, G01N 22/00

(54) **GUIDED WAVE RADAR LEVEL GAUGE AND METHOD OF OPERATING THE GUIDED WAVE RADAR LEVEL GAUGE**
WELLENGEFÜHRTES RADARFÜLLSTANDMESSGERÄT UND VERFAHREN ZUM BETRIEB DES WELLENGEFÜHRTEN RADARFÜLLSTANDMESSGERÄTS
JAUGE DE NIVEAU RADAR À ONDES GUIDÉES ET PROCÉDÉ DE FONCTIONNEMENT DE LA JAUGE DE NIVEAU RADAR À ONDES GUIDÉES

(43) Date of publication of application: 30.04.2025
(73) Proprietor: Rosemount Tank Radar AB, 435 23 Mölnlycke (SE)
(72) Inventor: FRIEDMANN, Anders, 582 46 LINKÖPING (SE); DELIN, Håkan, 585 93 LINKÖPING (SE); ERIKSSON, Mikael, 593 52 VÄSTERVIK (SE)
(74) Representative: Kransell & Wennborg KB

(56) References cited:
- EP-B1- 1 524 506
- EP-B1- 3 296 736
- WO-A1-02/25227
- WO-A1-2012/159683
- CN-A- 112 050 903
- US-A1- 2019 293 510

## Description

### Field of the Invention

The present invention relates to a guided wave radar level gauge and to a method for operating the guided wave radar level gauge. In particular, the present invention is aimed at guided wave radar level gauge for saturated steam applications.

### Background of the Invention

Radar level gauge (RLG) systems are in wide use for determining the filling level of a product contained in a tank. Radar level gauging is generally performed either by means of non-contact measurement, whereby electromagnetic signals are radiated towards the product contained in the tank, or by means of contact measurement, often referred to as guided wave radar (GWR), whereby electromagnetic signals are guided towards and into the product by a probe acting as a waveguide. The probe is generally arranged to extend vertically from the top towards the bottom of the tank.

The transmitted electromagnetic signals are reflected at the surface of the product, and the reflected signals are received by a receiver or transceiver comprised in the radar level gauge. Based on the transmitted and reflected signals, the distance to the surface of the product can be determined. More particularly, the distance to the surface of the product is generally determined based on the time between transmission of an electromagnetic signal and reception of the reflection thereof in the interface between the atmosphere in the tank and the product contained therein. In order to determine the actual filling level of the product, the distance from a reference position to the surface is determined based on the above-mentioned time (the so-called time-of-flight) and the propagation velocity of the electromagnetic signals.

The guided wave radar is particularly advantageous in high pressure saturated steam applications, such as boiler drums, high pressure feedwater heaters and steam separators where the high pressures and temperatures together with vibrations and potential magnetite coating of metallic parts may cause problems for other measurement techniques. Guided wave radar is used for direct level measurement and is completely independent of density, and with no moving parts, it offers the advantages of lower maintenance and greater reliability.

An example implementation of a guided wave radar for pressurized steam applications uses a reference reflector at a known location to be able compensate for variations in operating conditions due to vapor in the tank. However, the system requires that the position of the reference reflector is calibrated when commissioning the system or when replacing components of the system, and such a calibration needs to be performed in an empty tank or at least in near ambient conditions. Thereby, a process in the tank may need to be interrupted when changing parts of the radar level gauge.

US2019293510A1 discloses a guided wave radar (GWR)-based method of measuring a steam physical property, comprising: transmitting at least a first microwave pulse signal from a GWR sensor system comprising a pulsed radar gauge (PRG) including a processor implementing a steam measurement algorithm coupled to a transceiver that is coupled to a GWR probe in a steam boiler tank having a reference reflector (RR) along its length providing an impedance discontinuity with water and steam in said steam boiler tank; receiving an echo emanating from said RR responsive to said first microwave pulse signal to generate respective time of flight (TOF) measurement data; determining at least one said steam physical property of said steam from said TOF measurement data together with a reference TOF value representing a TOF measurement without said steam in said steam boiler tank.

Accordingly, it is desirable to provide improved solutions for providing accurate level measurements in high pressure saturated steam applications.

### Summary

In view of above-mentioned and other drawbacks of the prior art, it is an object of the present invention to provide a radar level gauge and a method for determining a fill level of a product with improved calibration.

According to a first aspect of the invention, there is provided a guided wave radar level gauge for determining a fill level of a product contained in a tank for high-pressure applications comprising: a transceiver configured to provide a transmit signal, and to receive a reflected signal resulting from a reflection of the transmit signal at a surface of the product; a probe connected to the transceiver and configured to propagate the transmit signal towards the surface and to return the reflected signal to the transceiver; a reference reflector arranged at a reference position on the probe; control circuitry configured to determine the fill level based on the received reflected signal, wherein the control circuitry is further configured to: perform a distance measurement to determine a measured distance to the reference reflector; determine a first dielectric constant of a vapor in the tank based on the measured distance to the reference reflector and a reference distance to the reference reflector; acquire a temperature or pressure of the vapor in the tank; determine a second dielectric constant of the vapor in the tank based on the acquired temperature or pressure; and compare a difference between the first and second dielectric constant of the vapor in the tank with a predetermined difference threshold value.

Through the described radar level gauge, it can be determined if the measured position of the reference reflector corresponds to the calibrated position of the reference reflector, i.e. if the calibration is correct, without having to empty the tank. In other words, the control can be performed during operation of the tank. Accordingly, the described radar level gauge can perform a proof test during operation which both reduces the risk of erroneous level measurements, and which simplifies replacement of parts in the radar level gauge since parts can be installed and calibration can be performed without opening, depressurizing or emptying the tank.

According to an example embodiment, the control circuitry is further configured to: determine that the difference between the first and second dielectric constant is above the predetermined threshold value; determine an updated position of the refence reflector based on the second dielectric constant; and set the reference position of the reference reflector to the updated position. The calibrated position of the reference reflector can thereby be automatically updated as required in response to changing conditions in the tank, ensuring that level measurement can be performed with the required accuracy.

According to an example embodiment, the control circuitry is further configured to determine that the difference between the first and second dielectric constant is above the predetermined threshold value and to provide a notification to a user that a calibrated position of the reference reflector is incorrect. In some situation, it may be desirable to also notify an operator of a change in conditions in the tank resulting in an erroneous calibrated position of the reference reflector since this may be an indication of a malfunction or the like which needs to be attended to. A notification can for example be provided in the form of a visual or audible alert.

According to an example embodiment, the control circuitry is further configured to determine that the difference between the first and second dielectric constant is below the predetermined threshold value and to provide a notification to a user that a calibrated position of the reference reflector is correct. The confirmation that the calibrated position of the reference reflector corresponds to the measured position acts as a proof check and verification that the calibration is correct, ensuring that the level measurement is reliable.

According to an example embodiment, the radar level gauge may further comprise a temperature sensor and/or a pressure sensor arranged in the tank to determine a temperature and/or a pressure in the tank. Accordingly, both temperature sensing and pressure sensing can then be integrated in the radar level gauge system and be controlled by the same measurement circuitry as the one controlling the level measurement, thereby facilitating integration of the proof check in a radar level gauge system. It would however also be possible to acquire the temperature and/or pressure from other sensors, or to manually input temperature and/or pressure values into the radar level gauge system for verification of the reference reflector position.

According to an example embodiment, the control circuitry is further configured to acquire a pressure in the tank, and to determine that the tank is pressurized when the pressure is above a first predetermined pressure threshold value.

Moreover, the control circuitry may be further configured to acquire a pressure in the tank and a temperature in the tank, and to determine that the tank comprises saturated steam when the pressure is above a second predetermined pressure threshold value and a temperature is above a predetermined temperature threshold value. Since the known relations between temperature, gas pressure and dielectric constant generally holds true for saturated steam, and not necessarily for non-saturated steam, it may be desirable that the radar level gauge system ensures that the tank is pressurized and that it contains saturated steam before determining a dielectric constant of the vapor in the tank based on temperature or pressure and before recalibrating a position of the reference reflector.

According to a second aspect of the invention, there is provided a method of determining a dielectric constant with a guided wave radar level gauge for determining a fill level of a product contained in a tank for high-pressure applications, the radar level gauge comprising a transceiver configured to provide a transmit signal, and to receive a reflected signal resulting from a reflection of the transmit signal at a surface of the product; a probe connected to the transceiver and configured to propagate the transmit signal towards the surface and to return the reflected signal to the transceiver; a reference reflector arranged at a reference position on the probe; control circuitry configured to determine the fill level based on the received reflected signal, the method comprising, by the control circuitry: performing a distance measurement determining a measured distance to the reference reflector; determining a first dielectric constant of vapor in the tank based on the measured distance to the reference reflector and a reference distance to the reference reflector; acquiring a temperature or pressure of the vapor in the tank; determining a second dielectric constant of the vapor in the tank based on the acquired temperature or pressure; and comparing a difference between the first and second dielectric constant of the vapor in the tank with a predetermined difference threshold value.

Effects and features of this second aspect of the present invention are largely analogous to those described above in connection with the first aspect of the invention.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing example embodiments of the invention, wherein:
Fig. 1 schematically illustrates an exemplary tank arrangement comprising a guided wave radar level gauge system according to an example embodiment;
Fig. 2 is schematic illustration of a measurement unit comprised in the radar level gauge system of Fig 1;
Fig. 3 schematically illustrates an exemplary tank arrangement comprising a guided wave radar level gauge system according to an example embodiment;
Fig. 4 is a flow chart outlining the general steps of a method according to an example embodiment;
Fig. 5 is a flow chart outlining the general steps of a method according to an example embodiment;
Fig. 6 is a flow chart outlining the general steps of a method according to an example embodiment; and
Fig. 7 is a flow chart outlining the general steps of a method according to an example embodiment.

### Detailed Description of Example Embodiments

In the present detailed description, various embodiments of the system and method according to the present invention are mainly described with reference to a guided wave radar level gauge installed in a tank located on land. However, the described system and method is suitable for use in other areas such as in marine applications. Moreover, various embodiments of the present invention are mainly discussed with reference to a radar level gauge system with a signal propagation device in the form of a probe, and wireless communication capabilities.

It should be noted that this by no means limits the scope of the present invention, which also covers a radar level gauge system with another type of signal guiding device, as well as a radar level gauge system configured for wired communication, for example using a 4-20 mA current loop and/or other wired means for communication.

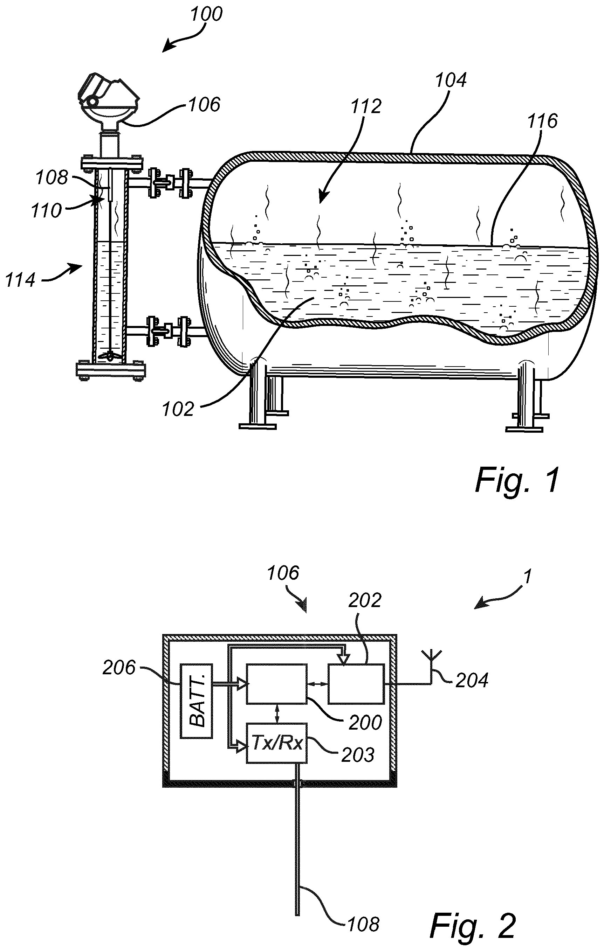

Fig. 1 schematically illustrates an exemplary radar level gauge system 100 of GWR (Guided Wave Radar) type installed at a tank for high-pressure applications. The radar level gauge system comprises a measurement unit 106 configured to provide a transmit signal, Tx, and to receive a reflected signal, Rx, resulting from a reflection of the transmit signal at a surface 116 of the product, a probe 108 connected to the measurement unit 106 and configured to propagate the transmit signal towards the surface 116 and to return the reflected signal to the measurement unit 106, a reference reflector 110 arranged at a reference position on the probe 108, and a measurement unit control circuitry arranged in the measurement unit 106 and configured to determine the fill level based on the received reflected signal.

The guided wave radar level gauge system 100 is installed to measure the filling level of a product 102 in the tank 104. Moreover, the described radar level gauge system 100 is configured to determine the fill level of product in a tank 104 in a high pressure steam application where the tank comprises a liquid and pressurized vapor 112. It is here assumed that the volume above a determined fill level comprises saturated vapor 112. In the illustrated example, the probe 108 is arranged in a still pipe 114 arranged separately from the tank 104. The probe 108 is extending from the measurement unit 106 towards and into the product 102 in the still pipe 114. The still pipe 114 is connected to the tank so that the fill level of the tank 104 is the same as the fill level in the still pipe 114, thereby enabling measurement of the fill level in the tank by measuring the level of the product in the still pipe 114.

By analyzing a transmitted signal being guided by the probe 108 towards the surface 116 of the product 102, and a reflection signal traveling back from the surface 116, a filling level of the product 102 in the tank 104 can be determined. It should be noted that, although a tank 104 containing a single product 102 is discussed herein, the distance to any material interface along the probe can be measured in a similar manner.

The radar level gauge system 100 in Fig. 1 will now be described in more detail with reference to the schematic block diagram in Fig. 2. Referring to the schematic block diagram in Fig. 2, the measurement unit 106 of the exemplary radar level gauge system 100 in Fig. 1 comprises measurement control circuitry 200, which may also be referred to as a measurement control unit (MCU) 200, a wireless communication control unit (WCU) 202, a transceiver (Tx/Rx) 203, a communication antenna 204, and an energy store, such as a battery 206.

As is schematically illustrated in Fig. 2, the MCU 200 controls the transceiver 203 to generate, transmit and receive electromagnetic signals. The transmitted signals pass through a feed-through to the probe 108, and the received signals pass from the probe 108 through the feed-through to the transceiver 203.

The MCU 200 determines the filling level of the product 102 in the tank 104 and provides a value indicative of the filling level to an external device, such as a control center, from the MCU 200 via the WCU 202 through the communication antenna 204. The radar level gauge system 100 may advantageously be configured according to the so-called WirelessHART communication protocol (IEC 620691).

Although the measurement unit 106 is shown to comprise an energy store (battery 206) and to comprise devices (such as the WCU 202 and the communication antenna 204) for allowing wireless communication, it should be understood that both power supply and communication may be provided in different ways, such as through communication lines (for example 4-20 mA lines).

The local energy store 206 need not (only) comprise a battery, but may alternatively, or in combination, comprise a capacitor or super-capacitor.

Moreover, the measurement control unit (MCU) 200 may more generally be referred to as control circuitry 200, and the control circuitry 200 may include a microprocessor, microcontroller, programmable digital signal processor or another programmable device. The control circuitry may also, or instead, include an application specific integrated circuit, a programmable gate array or programmable array logic, a programmable logic device, or a digital signal processor. Where the control circuitry includes a programmable device such as the microprocessor, microcontroller or programmable digital signal processor mentioned above, the processor may further include computer executable code that controls operation of the programmable device.

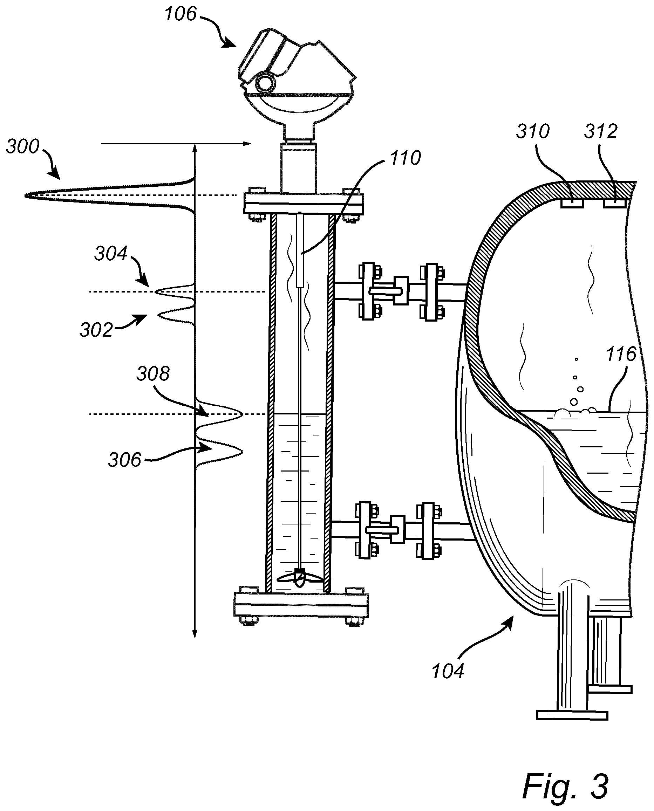

Fig. 3 schematically illustrate signals detecting echoes resulting from a level measurement using the radar level gauge system. The dashed line represents the measured signal without correction and the solid line represents a calibrated signal using a correctly calibrated reference reflector. Echoes in the signal indicate a change in impedance along the length of the probe 108 in the material surrounding the probe, or in the probe 108 itself.

The first and largest echo 300 as seen from the direction of the measurement unit 106 is the same for both the calibrated and uncalibrated measurement, identifying a transition from the measurement unit 106 to the pipe 114.

The next echoes 302, 304 represent the echoes from the reference reflector 110. Here it should be noted that the reference reflector 100 may be configured in many different ways, for example depending on the type of probe used. The reference reflector 110 may for example vary in length, and for a single probe the reference reflector 110 may be configured as a change in diameter of the probe 108 where a transition from a larger diameter to a smaller diameter of the probe 108 gives rise to a reference echo. The reference reflector 108 may also comprise a separate reflector element attached to the probe 108.

The lower 302 of the two reference reflector echoes represents the echo 302 from the measured and uncalibrated signal and the upper reference reflector echo 304 represents the echo for the calibrated signal.

Similarly, in the next two echoes at the location of the surface 116 of the product, the lower 306 of the two surface echoes illustrates the echo 306 from the measured and uncalibrated signal and the upper echo 308 represents the actual fill level for the correctly calibrated signal.

The reason for the erroneous echo positions in the measurement is due to that the dielectric constant of the vapor 112 in the pipe is different from the dielectric constant of air and that the propagation velocity of the signal is dependent on the dielectric constant of the material surrounding the probe. In particular, the dielectric constant in the vapor 112 is higher than for air, which gives an erroneous result if an original assumption is made that the dielectric constant of the ambient surrounding the probe is equal to 1. The dielectric constant for pressurized steam increases with increasing pressure and temperature, which also leads to an increasing error in the uncalibrated signal.

By knowing the actual physical position of the reference reflector 110 and thereby the distance from the measurement unit 106 to the reference reflector, the measured signal can be calibrated, and the correct fill level can be determined. This also makes it possible to determine the dielectric constant of the vapor in the tank based on the distance between the uncalibrated echo 302 and the actual position of the reference reflector 110.

However, in some circumstances the physical position of the reference reflector 110 may be unknown, or it may be desirable to verify that the assumed position of the reference reflector 110 is correct. The position of the reference reflector 110 may for example be unknown, or at least unverified, if components of the radar level gauge have been replaced or reinstalled, or if information has been lost for other reasons. In such situations it is advantageous to be able to determine the position of the reference reflector 110 without having to empty and depressurize the tank to perform measurements in ambient air where the dielectric constant is equal to one.

A determination of the conditions in the tank and thereby of the position of the reference reflector can be performed by the system and method of the present disclosure.

A requirement for performing the described measurements is that the reference reflector is located above the fill level of the tank. It can be verified that the location of the reference reflector is located above the fill level by comparing the sign of the echo signal where the reference reflector is configured to provide a negative echo and the surface provides a positive echo. By observing the respective position of the first positive echo and the first negative echo as seen from the start of the probe, it can be established if the reflector is above or below the fill level.

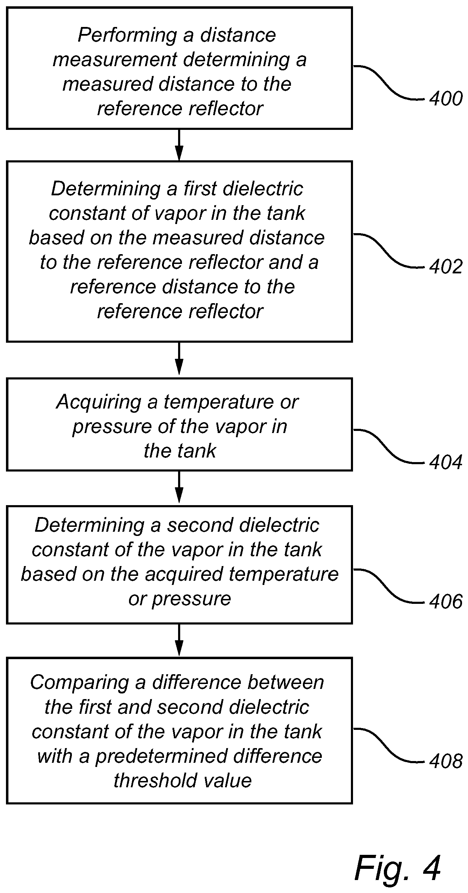

An example method for of determining a dielectric constant in a guided wave radar level gauge is performed by the control circuitry 200 of the radar level gauge system 100 and will be described with further reference to Fig. 4 which is a flow chart outlining steps of the method.

The method comprises, by the control circuitry 200, performing 400 a distance measurement determining a measured distance to the reference reflector 110. The distance to the reference reflector 110 can be determined during a level measurement where different echoes in the reflected signal can be distinguished and distances from the measurement unit 106 to the reference reflector 110 and to the surface 116 can be determined. Referring to Fig. 3, the lower reference reflector echo 302 illustrates the measured signal.

Next, a first dielectric constant, ε₁, of vapor in the tank can be determined 402 a based on the measured distance to the reference reflector 110 and a known reference distance to the reference reflector 110. A difference between the measured distance and the reference distance is indicative of a dielectric constant of the vapor surrounding the probe different from 1, and since the relation between dielectric constant and propagation velocity along is known, the first dielectric constant, ε₁, can be determined.

The next step comprises acquiring 404 a temperature, T, or a pressure, P, of the vapor in the tank. In the example embodiment illustrated in Fig. 3, the radar level gauge system 100 further comprises a temperature sensor 310 and a pressure sensor 312 arranged in the tank 104 to determine a temperature and/or a pressure in the tank 104. It is sufficient to know one of temperature and pressure since the relation between temperature, pressure and dielectric constant is known in a pressurized tank where it can be assumed that the steam is saturated water vapor. A temperature or pressure can thereby be measured continuously or intermittently to provide input to the radar level gauge system 100.

A current temperature or pressure in the tank may also be input manually by an operator to the radar level gauge system 100 based on a reading from a separate temperature or pressure sensor.

Once a temperature and/or pressure has been determined, a second dielectric constant, ε₂, of the vapor in the tank can be determined 406 based on the acquired temperature or pressure, for example by using values given in Table 1 below describing the relationship between temperature, pressure and dielectric constant for saturated water vapor. Even though the present description describes relationships between temperature, pressure and dielectric constant for saturated water vapor, the same general principle can be used for saturated vapors of other materials. Furthermore, in addition to the use of tabulated values, it is also possible to use analytical expressions describing the relation between temperature, pressure and dielectric constant. Such analytical expressions can for example be derived by curve-fitting to measured values, through simulations and modelling or by theoretical calculations.

**Table 1. Error distance with changing temperature and pressure without vapor compensation**

| Temp. (T) (°F/°C) | Pressure (P) (psia/bar) | ε of liquid | ε of vapor | Error in distance % |
|---|---|---|---|---|
| 100/38 | 1/0.1 | 73.95 | 1.001 | 0.0 |
| 200/93 | 14/1 | 57.26 | 1.005 | 0.2 |
| 300/149 | 72/5 | 44.26 | 1.022 | 1.1 |
| 400/204 | 247/17 | 34.00 | 1.069 | 3.4 |
| 500/260 | 681/47 | 25.58 | 1.180 | 8.6 |
| 600/316 | 1543/106 | 18.04 | 1.461 | 20.9 |
| 618/325 | 1740/120 | 16.7 | 1.55 | 24.5 |
| 649/343 | 2176/150 | 14.34 | 1.8 | 34.2 |
| 676/358 | 2611/180 | 11.86 | 2.19 | 48 |
| 691/366 | 2900/200 | 9.92 | 2.67 | 63.4 |
| 699/370 | 3046/210 | 8.9 | 3.12 | 76.6 |
| 702/372 | 3120/215 | Above critical point, distinct liquid and gas phases do not exist. | | |

When the first and second dielectric constants ε₁ and ε₂ have been determined, a difference between the first and second dielectric constant of the vapor in the tank is compared 408 with a predetermined difference threshold value. The difference threshold value may for example be a percentage of the measurement value or it may be an absolute value which can be set for a given implementation of the radar level gauge system. The predetermined threshold value may for example be 4% of the dielectric constant calculated from the distance measurement.

Once the difference between ε₁ and ε₂ have been determined, further action may be taken depending on the outcome of the comparison and depending on the requirements for a specific application.

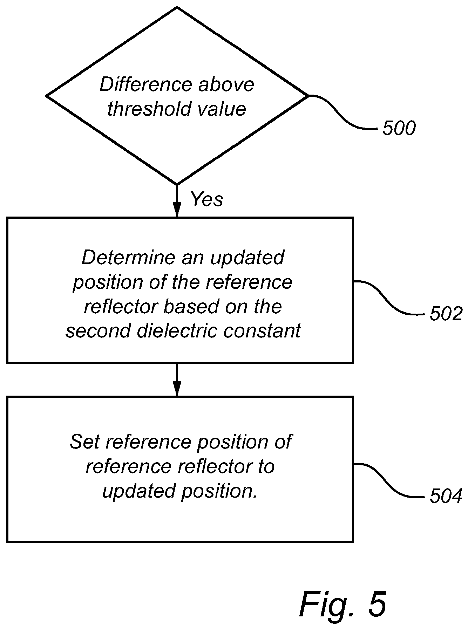

Fig. 5 is a flow chart describing steps of a method according to an example embodiment. The described method further comprises determining 500 that the difference between the first and second dielectric constant is above the predetermined threshold value, for example if ε₂ deviates by more than 4% from ε₁. This can be taken as an indication that the calibrated position of the reference reflector 110 is incorrect, and an updated position of the refence reflector 108 can then be determined 502 based on the second dielectric constant ε₂ representing the actual conditions in the tank. The reference position of the reference reflector 110 is subsequently set 504 to the updated position, thereby updating the reference position of the reference reflector 110.

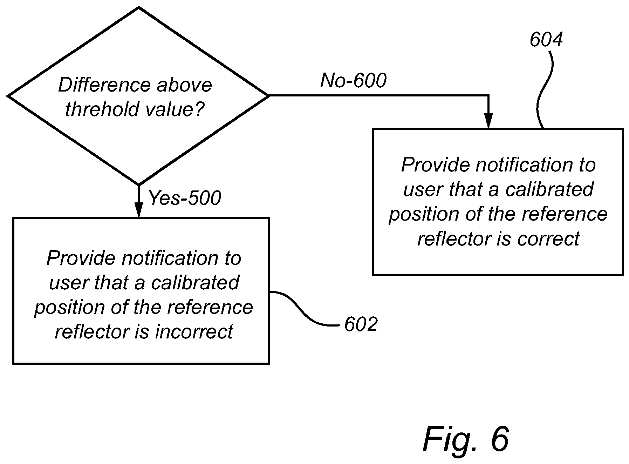

Fig. 6 is a flow chart describing steps of a method according to an example embodiment comprising determining 500 that the difference between the first and second dielectric constant ε₁ and ε₂ is above the predetermined threshold value; and providing 602 a notification to a user that a calibrated position of the reference reflector 110 is incorrect. It will then be up to the user to determine how to handle the deviation between the dielectric constants. In some situations, a reason for the deviation is known and it may not be desirable to automatically update the reference location of the reference reflector 110.

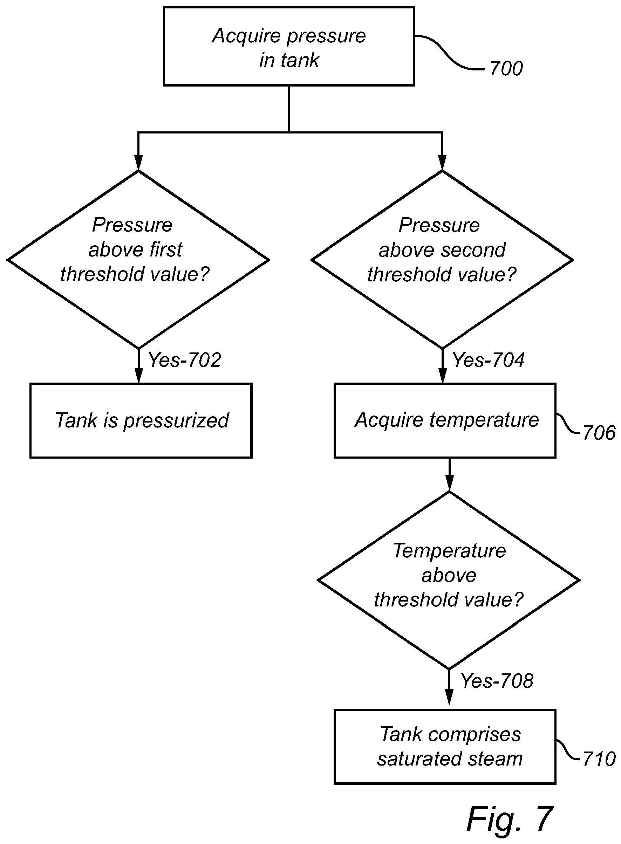

Fig. 7 is a flow chart describing steps of a method according to an example embodiment further comprising determining 600 that the difference between the first and second dielectric constant is below the predetermined threshold value; and providing 508 a notification to a user that a calibrated position of the reference reflector 110 is correct.

In some applications, it is assumed that the tank comprises saturated steam when the measurement is performed. A verification that the tank comprises saturated steam can also be given by an operator.

However, it is also possible to verify that the tank comprises saturated steam by comparing the temperature and/or pressure in the tank with corresponding temperature and/or pressure threshold values. Fig. 7 schematically illustrates example embodiments of the method where the method further comprises acquiring 700 a pressure in the tank and determining 702 that the tank is pressurized when the pressure is above a first predetermined pressure threshold value. The first predetermined pressure threshold value can be selected so that it can be determined if the tank is pressurized, or if it is open and at ambient pressure.

The method may further comprise acquiring a pressure 700 in the tank and a temperature 706 in the tank and determining 710 that the tank comprises saturated steam when it is determined 704 that the pressure is above a second predetermined pressure threshold value, and it is subsequently determined 708 that a temperature is above a predetermined temperature threshold value. The threshold values for the temperature and pressure can be determined based on known properties of saturated steam in a pressurized tank.

The described method thereby provides a proof testing procedure where a correct calibration of a reference reflector position can be verified. In particular, the proof test checks that a dielectric constant acquired from a lookup table and based on a measured temperature and/or pressure correspond to the dielectric constant from the measured distance to the reference reflector. The proof test can be configured to be performed automatically or manually, and it provides a verification that the level measurement is correct and that level measurements are correctly calibrated also under changing conditions in the tank.

Even though the invention has been described with reference to specific exemplifying embodiments thereof, many different alterations, modifications and the like will become apparent for those skilled in the art. Also, it should be noted that parts of the system and method may be omitted, interchanged or arranged in various ways, the system and method yet being able to perform the functionality of the present invention.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality.

## Claims

1. A guided wave radar level gauge (100) for determining a fill level of a product (102) contained in a tank (104) for high-pressure applications comprising:
a transceiver (203) configured to provide a transmit signal, and to receive a reflected signal resulting from a reflection of the transmit signal at a surface of the product;
a probe (108) connected to the transceiver and configured to propagate the transmit signal towards the surface and to return the reflected signal to the transceiver;
a reference reflector (110) arranged at a reference position on the probe;
control circuitry (200) configured to determine the fill level based on the received reflected signal, wherein the control circuitry is further configured to:
perform a distance measurement to determine a measured distance to the reference reflector;
determine a first dielectric constant of a vapor in the tank based on the measured distance to the reference reflector and a reference distance to the reference reflector, **characterised in that** the control circuitry is further configured to:
acquire a temperature or pressure of the vapor in the tank;
determine a second dielectric constant of the vapor in the tank based on the acquired temperature or pressure; and
compare a difference between the first and second dielectric constant of the vapor in the tank with a predetermined difference threshold value.

2. The radar level gauge according to claim 1, wherein the control circuitry is further configured to:
determine that the difference between the first and second dielectric constant is above the predetermined threshold value;
determine an updated position of the refence reflector based on the second dielectric constant; and
set the reference position of the reference reflector to the updated position.

3. The radar level gauge according to claim 1, wherein the control circuitry is further configured to determine that the difference between the first and second dielectric constant is above the predetermined threshold value and to provide a notification to a user that a calibrated position of the reference reflector is incorrect

4. The radar level gauge according to claim 1, wherein the control circuitry is further configured to determine that the difference between the first and second dielectric constant is below the predetermined threshold value and to provide a notification to a user that a calibrated position of the reference reflector is correct.

5. The radar level gauge according to any one of the preceding claims, further comprising a temperature sensor (310) and/or a pressure sensor (312) arranged in the tank to determine a temperature and/or a pressure in the tank.

6. The radar level gauge according to any one of the preceding claims, wherein the control circuitry is further configured to acquire a pressure in the tank, and to determine that the tank is pressurized when the pressure is above a first predetermined pressure threshold value.

7. The radar level gauge according to any one of the preceding claims, wherein the control circuitry is further configured to acquire a pressure in the tank and a temperature in the tank, and to determine that the tank comprises saturated steam when the pressure is above a second predetermined pressure threshold value and a temperature is above a predetermined temperature threshold value.

8. Method of determining a dielectric constant with a guided wave radar level gauge (100) for determining a fill level of a product (102) contained in a tank (104) for high-pressure applications, the radar level gauge comprising a transceiver (203) configured to provide a transmit signal, and to receive a reflected signal resulting from a reflection of the transmit signal at a surface of the product;
a probe (108) connected to the transceiver and configured to propagate the transmit signal towards the surface and to return the reflected signal to the transceiver;
a reference reflector (110) arranged at a reference position on the probe; and
control circuitry (200) configured to determine the fill level based on the received reflected signal, the method comprising the following steps by the control circuitry:
performing (400) a distance measurement determining a measured distance to the reference reflector;
determining (402) a first dielectric constant of vapor in the tank based on the measured distance to the reference reflector and a reference distance to the reference reflector, **characterised by** further comprising the following steps by the control circuitry:
acquiring (404) a temperature or pressure of the vapor in the tank;
determining (406) a second dielectric constant of the vapor in the tank based on the acquired temperature or pressure; and
comparing (408) a difference between the first and second dielectric constant of the vapor in the tank with a predetermined difference threshold value.

9. The method according to claim 8, further comprising:
determining (500) that the difference between the first and second dielectric constant is above the predetermined threshold value;
determining (502) an updated position of the refence reflector based on the second dielectric constant; and
setting (504) the reference position of the reference reflector to the updated position.

10. The method according to claim 8, further comprising:
determining (500) that the difference between the first and second dielectric constant is above the predetermined threshold value; and
providing (602) a notification to a user that a calibrated position of the reference reflector is incorrect.

11. The method according to claim 8, further comprising:
determining (600) that the difference between the first and second dielectric constant is below the predetermined threshold value; and
providing (508) a notification to a user that a calibrated position of the reference reflector is correct.

12. The method according to any one of claims 8 to 11, further comprising:
acquiring (700) a pressure in the tank; and
determining (702) that the tank is pressurized when the pressure is above a first predetermined pressure threshold value.

13. The method according to any one of claims 8 to 12, further comprising:
acquiring a pressure (700) in the tank and a temperature (706) in the tank; and
determining (710) that the tank comprises saturated steam when the pressure is above a second predetermined pressure threshold value and a temperature is above a predetermined temperature threshold value.

14. A computer program product comprising program code for performing, when executed by the control circuitry (200), the method of any of claims 8-13.

15. A non-transitory computer-readable storage medium comprising instructions, which when executed by the control circuitry (200), cause the control circuitry to perform the method of any of claims 8-13.

## Patentansprüche

1. Füllstandsanzeiger (100) mit geführtem Radar zum Bestimmen eines Füllstands eines Produkts (102), das in einem Tank (104) enthalten ist, für Hochdruckanwendungen, umfassend:
einen Sendeempfänger (203), der eingerichtet ist, um ein Sendesignal bereitzustellen und um ein reflektiertes Signal zu empfangen, das sich aus einer Reflexion des Sendesignals an einer Oberfläche des Produkts ergibt;
eine Sonde (108), die mit dem Sendeempfänger verbunden und eingerichtet ist, um das Sendesignal zu der Oberfläche hin auszubreiten und um das reflektierte Signal zu dem Sendeempfänger zurückzuführen;
einen Referenzreflektor (110), der an einer Referenzposition auf der Sonde angeordnet ist;
eine Steuerschaltungsanordnung (200), die eingerichtet ist, um den Füllstand basierend auf dem empfangenen reflektierten Signal zu bestimmen, wobei die Steuerschaltungsanordnung ferner eingerichtet ist zum:
Durchführen einer Abstandsmessung, um einen gemessenen Abstand zu dem Referenzreflektor zu bestimmen;
Bestimmen einer ersten Dielektrizitätskonstante eines Dampfes in dem Tank basierend auf dem gemessenen Abstand zu dem Referenzreflektor und einem Referenzabstand zu dem Referenzreflektor,
**dadurch gekennzeichnet, dass** die Steuerschaltungsanordnung ferner eingerichtet ist zum:
Erfassen einer Temperatur oder eines Drucks des Dampfes in dem Tank;
Bestimmen einer zweiten Dielektrizitätskonstante des Dampfes in dem Tank basierend auf der erfassten Temperatur oder dem erfassten Druck; und
Vergleichen einer Differenz zwischen der ersten und der zweiten Dielektrizitätskonstante des Dampfes in dem Tank mit einem vorbestimmten Differenzschwellenwert.

2. Radarfüllstandsanzeiger nach Anspruch 1, wobei die Steuerschaltungsanordnung ferner eingerichtet ist zum:
Bestimmen, dass die Differenz zwischen der ersten und der zweiten Dielektrizitätskonstante über dem vorbestimmten Schwellenwert liegt;
Bestimmen einer aktualisierten Position des Referenzreflektors basierend auf der zweiten Dielektrizitätskonstante; und
Festlegen der Referenzposition des Referenzreflektors auf die aktualisierte Position.

3. Radarfüllstandsanzeiger nach Anspruch 1, wobei die Steuerschaltungsanordnung ferner eingerichtet, um zu bestimmen, dass die Differenz zwischen der ersten und der zweiten Dielektrizitätskonstante über dem vorbestimmten Schwellenwert liegt, und um eine Benachrichtigung an einen Benutzer bereitzustellen, dass eine kalibrierte Position des Referenzreflektors falsch ist.

4. Radarfüllstandsanzeiger nach Anspruch 1, wobei die Steuerschaltungsanordnung ferner eingerichtet, um zu bestimmen, dass die Differenz zwischen der ersten und der zweiten Dielektrizitätskonstante unter dem vorbestimmten Schwellenwert liegt, und um eine Benachrichtigung an einen Benutzer bereitzustellen, dass eine kalibrierte Position des Referenzreflektors richtig ist.

5. Radarfüllstandsanzeiger nach einem der vorhergehenden Ansprüche, ferner umfassend einen Temperatursensor (310) und/oder einen Drucksensor (312), die in dem Tank angeordnet sind, um eine Temperatur und/oder einen Druck in dem Tank zu bestimmen.

6. Radarfüllstandsanzeiger nach einem der vorhergehenden Ansprüche, wobei die Steuerschaltungsanordnung ferner eingerichtet ist, um einen Druck in dem Tank zu erfassen und um zu bestimmen, dass der Tank mit Druck beaufschlagt ist, wenn der Druck über einem ersten vorbestimmten Druckschwellwert liegt.

7. Radarfüllstandsanzeiger nach einem der vorhergehenden Ansprüche, wobei die Steuerschaltungsanordnung ferner eingerichtet ist, um einen Druck in dem Tank und eine Temperatur in dem Tank zu erfassen und um zu bestimmen, dass der Tank gesättigten Dampf umfasst, wenn der Druck über einem zweiten vorbestimmten Druckschwellenwert liegt und eine Temperatur über einem vorbestimmten Temperaturschwellenwert liegt.

8. Verfahren zum Bestimmen einer Dielektrizitätskonstante mit einem Füllstandsanzeiger (100) mit geführtem Radar zum Bestimmen eines Füllstands eines Produkts (102), das in einem Tank (104) enthalten ist, für Hochdruckanwendungen, wobei der Radarfüllstandsanzeiger umfasst:
einen Sendeempfänger (203), der eingerichtet ist, um ein Sendesignal bereitzustellen und um ein reflektiertes Signal zu empfangen, das sich aus einer Reflexion des Sendesignals an einer Oberfläche des Produkts ergibt;
eine Sonde (108), die mit dem Sendeempfänger verbunden und eingerichtet ist, um das Sendesignal zu der Oberfläche hin auszubreiten und um das reflektierte Signal zu dem Sendeempfänger zurückzuführen;
einen Referenzreflektor (110), der an einer Referenzposition auf der Sonde angeordnet ist; und
eine Steuerschaltungsanordnung (200), die eingerichtet ist, um den Füllstand basierend auf dem empfangenen reflektierten Signal zu bestimmen, wobei das Verfahren die folgenden Schritte durch die Steuerschaltungsanordnung umfasst:
Durchführen (400) einer Abstandsmessung, die einen gemessenen Abstand zu dem Referenzreflektor bestimmt;
Bestimmen (402) einer ersten Dielektrizitätskonstante von Dampf in dem Tank basierend auf dem gemessenen Abstand zu dem Referenzreflektor und einem Referenzabstand zu dem Referenzreflektor,
**dadurch gekennzeichnet, dass** es ferner die folgenden Schritte durch die Steuerschaltungsanordnung umfasst:
Erfassen (404) einer Temperatur oder eines Drucks des Dampfes in dem Tank;
Bestimmen (406) einer zweiten Dielektrizitätskonstante des Dampfes in dem Tank basierend auf der erfassten Temperatur oder dem erfassten Druck; und
Vergleichen (408) einer Differenz zwischen der ersten und der zweiten Dielektrizitätskonstante des Dampfes in dem Tank mit einem vorbestimmten Differenzschwellenwert.

9. Verfahren nach Anspruch 8, ferner umfassend:
Bestimmen (500), dass die Differenz zwischen der ersten und der zweiten Dielektrizitätskonstante über dem vorbestimmten Schwellenwert liegt;
Bestimmen (502) einer aktualisierten Position des Referenzreflektors basierend auf der zweiten Dielektrizitätskonstante; und
Festlegen (504) der Referenzposition des Referenzreflektors auf die aktualisierte Position.

10. Verfahren nach Anspruch 8, ferner umfassend:
Bestimmen (500), dass die Differenz zwischen der ersten und der zweiten Dielektrizitätskonstante über dem vorbestimmten Schwellenwert liegt; und
Bereitstellen (602) einer Benachrichtigung an einen Benutzer, dass eine kalibrierte Position des Referenzreflektors falsch ist.

11. Verfahren nach Anspruch 8, ferner umfassend:
Bestimmen (600), dass die Differenz zwischen der ersten und der zweiten Dielektrizitätskonstante unter dem vorbestimmten Schwellenwert liegt; und
Bereitstellen (508) einer Benachrichtigung an einen Benutzer, dass eine kalibrierte Position des Referenzreflektors richtig ist.

12. Verfahren nach einem der Ansprüche 8 bis 11, ferner umfassend:
Erfassen (700) eines Drucks in dem Tank; und
Bestimmen (702), dass der Tank mit Druck beaufschlagt ist, wenn der Druck über einem ersten vorbestimmten Druckschwellenwert liegt.

13. Verfahren nach einem der Ansprüche 8 bis 12, ferner umfassend:
Erfassen eines Drucks (700) in dem Tank und einer Temperatur (706) in dem Tank; und
Bestimmen (710), dass der Tank gesättigten Dampf umfasst, wenn der Druck über einem zweiten vorbestimmten Druckschwellenwert liegt und eine Temperatur über einem vorbestimmten Temperaturschwellenwert liegt.

14. Computerprogrammprodukt, umfassend einen Programmcode zum Durchführen, wenn ausgeführt von der Steuerschaltungsanordnung (200), des Verfahrens nach einem der Ansprüche 8 bis 13.

15. Nicht flüchtiges, computerlesbares Speichermedium, umfassend Anweisungen, die, wenn sie von der Steuerschaltungsanordnung (200) ausgeführt werden, die Steuerschaltungsanordnung veranlassen, das Verfahren nach einem der Ansprüche 8 bis 13 durchzuführen.

## Revendications

1. Jauge de niveau radar à ondes guidées (100) pour la détermination d'un niveau de remplissage d'un produit (102) contenu dans un réservoir (104) pour des applications à haute pression, comprenant :
un émetteur-récepteur (203) configuré pour fournir un signal d'émission, et pour recevoir un signal réfléchi résultant d'une réflexion du signal d'émission à une surface du produit ;
une sonde (108) connectée à l'émetteur-récepteur et configurée pour propager le signal d'émission vers la surface et pour renvoyer le signal réfléchi vers l'émetteur-récepteur ;
un réflecteur de référence (110) agencé à une position de référence sur la sonde ;
un circuit de commande (200) configuré pour déterminer le niveau de remplissage sur la base du signal réfléchi reçu, dans lequel le circuit de commande est en outre configuré pour :
exécuter une mesure de distance pour déterminer une distance mesurée par rapport au réflecteur de référence ;
déterminer une première constante diélectrique d'une vapeur dans le réservoir sur la base de la distance mesurée par rapport au réflecteur de référence et d'une distance de référence par rapport au réflecteur de référence, **caractérisée en ce que** le circuit de commande est en outre configuré pour :
acquérir une température ou une pression de la vapeur dans le réservoir ;
déterminer une deuxième constante diélectrique de la vapeur dans le réservoir sur la base de la température ou pression acquise ; et
comparer une différence entre les première et deuxième constantes diélectriques de la vapeur dans le réservoir avec une valeur seuil de différence prédéterminée.

2. Jauge de niveau radar selon la revendication 1, dans laquelle le circuit de commande est en outre configuré pour :
déterminer que la différence entre les première et deuxième constantes diélectriques est supérieure à la valeur seuil prédéterminée ;
déterminer une position actualisée du réflecteur de référence sur la base de la deuxième constante diélectrique ; et
définir la position de référence du réflecteur de référence sur la position actualisée.

3. Jauge de niveau radar selon la revendication 1, dans laquelle le circuit de commande est en outre configuré pour déterminer que la différence entre les première et deuxième constantes diélectriques est supérieure à la valeur seuil prédéterminée et pour fournir une notification à un utilisateur, indiquant qu'une position étalonnée du réflecteur de référence est incorrecte.

4. Jauge de niveau radar selon la revendication 1, dans laquelle le circuit de commande est en outre configuré pour déterminer que la différence entre les première et deuxième constantes diélectriques est inférieure à la valeur seuil prédéterminée et pour fournir une notification à un utilisateur, indiquant qu'une position étalonnée du réflecteur de référence est correcte.

5. Jauge de niveau radar selon l'une quelconque des revendications précédentes, comprenant en outre un capteur de température (310) et/ou un capteur de pression (312) agencés dans le réservoir pour déterminer une température et/ou une pression dans le réservoir.

6. Jauge de niveau radar selon l'une quelconque des revendications précédentes, dans laquelle le circuit de commande est en outre configuré pour acquérir une pression dans le réservoir, et pour déterminer que le réservoir est sous pression lorsque la pression est supérieure à une première valeur seuil de pression prédéterminée.

7. Jauge de niveau radar selon l'une quelconque des revendications précédentes, dans laquelle le circuit de commande est en outre configuré pour acquérir une pression dans le réservoir et une température dans le réservoir, et pour déterminer que le réservoir comprend de la vapeur saturée lorsque la pression est supérieure à une deuxième valeur seuil de pression prédéterminée et qu'une température est supérieure à une valeur seuil de température prédéterminée.

8. Procédé de détermination d'une constante diélectrique à l'aide d'une jauge de niveau radar à ondes guidées (100) destinée à déterminer un niveau de remplissage d'un produit (102) contenu dans un réservoir (104) pour des applications à haute pression, la jauge de niveau radar comprenant un émetteur-récepteur (203) configuré pour fournir un signal d'émission, et pour recevoir un signal réfléchi résultant d'une réflexion du signal d'émission à une surface du produit ;
une sonde (108) connectée à l'émetteur-récepteur et configurée pour propager le signal d'émission vers la surface et pour renvoyer le signal réfléchi vers l'émetteur-récepteur ;
un réflecteur de référence (110) agencé à une position de référence sur la sonde ; et
un circuit de commande (200) configuré pour déterminer le niveau de remplissage sur la base du signal réfléchi reçu, le procédé comprenant les étapes suivantes, mises en œuvre par le circuit de commande :
l'exécution (400) d'une mesure de distance déterminant une distance mesurée par rapport au réflecteur de référence ;
la détermination (402) d'une première constante diélectrique d'une vapeur dans le réservoir sur la base de la distance mesurée par rapport au réflecteur de référence et d'une distance de référence par rapport au réflecteur de référence, **caractérisé en ce qu'**il comprend en outre les étapes suivantes, mises en œuvre par le circuit de commande :
l'acquisition (404) d'une température ou d'une pression de la vapeur dans le réservoir ;
la détermination (406) d'une deuxième constante diélectrique de la vapeur dans le réservoir sur la base de la température ou pression acquise ; et
la comparaison (408) d'une différence entre les première et deuxième constantes diélectriques de la vapeur dans le réservoir avec une valeur seuil de différence prédéterminée.

9. Procédé selon la revendication 8, comprenant en outre :
la détermination (500) que la différence entre les première et deuxième constantes diélectriques est supérieure à la valeur seuil prédéterminée ;
la détermination (502) d'une position actualisée du réflecteur de référence sur la base de la deuxième constante diélectrique ; et
la définition (504) de la position de référence du réflecteur de référence sur la position actualisée.

10. Procédé selon la revendication 8, comprenant en outre :
la détermination (500) que la différence entre les première et deuxième constantes diélectriques est supérieure à la valeur seuil prédéterminée ; et
la fourniture (602) d'une notification à un utilisateur, indiquant qu'une position étalonnée du réflecteur de référence est incorrecte.

11. Procédé selon la revendication 8, comprenant en outre :
la détermination (600) que la différence entre les première et deuxième constantes diélectriques est inférieure à la valeur seuil prédéterminée ; et
la fourniture (508) d'une notification à un utilisateur, indiquant qu'une position étalonnée du réflecteur de référence est correcte.

12. Procédé selon l'une quelconque des revendications 8 à 11, comprenant en outre :
l'acquisition (700) d'une pression dans le réservoir ; et
la détermination (702) que le réservoir est sous pression lorsque la pression est supérieure à une première valeur seuil de pression prédéterminée.

13. Procédé selon l'une quelconque des revendications 8 à 12, comprenant en outre :
l'acquisition d'une pression (700) dans le réservoir et d'une température (706) dans le réservoir ; et
la détermination (710) que le réservoir comprend de la vapeur saturée lorsque la pression est supérieure à une deuxième valeur seuil de pression prédéterminée et qu'une température est supérieure à une valeur seuil de température prédéterminée.

14. Produit de programme informatique comprenant un code de programme destiné à mettre en œuvre le procédé selon l'une quelconque des revendications 8 à 13, lorsqu'il est exécuté par le circuit de commande (200).

15. Support de stockage non transitoire lisible par ordinateur, comprenant des instructions amenant le circuit de commande à mettre en œuvre le procédé selon l'une quelconque des revendications 8 à 13, lorsqu'elles sont exécutées par le circuit de commande (200) .
